# EUROPEAN PATENT SPECIFICATION

(11) **EP 3 296 590 B1**
(45) Date of publication and mention of the grant of the patent: **03.06.2020**
(21) Application number: 17184715.5
(22) Date of filing: 03.08.2017
(51) Int. Cl.: F16H 1/06, F16H 57/12, F16H 57/022

(54) **ROTATION TRANSMISSION DEVICE**
ROTATIONSÜBERTRAGUNGSVORRICHTUNG
DISPOSITIF DE TRANSMISSION DE ROTATION

(30) Priority: 02.09.2016 JP 2016171928
(43) Date of publication of application: 21.03.2018
(73) Proprietor: Alps Alpine Co., Ltd., Tokyo 145-8501 (JP)
(72) Inventor: Sato, Takashi, Tokyo, Tokyo 145-8501 (JP)
(74) Representative: Schmitt-Nilson Schraud Waibel Wohlfrom Patentanwälte Partnerschaft mbB

(56) References cited:
- EP-A1- 1 707 844
- WO-A1-2009/151122
- DE-A1- 3 114 170
- JP-A- H11 141 623

## Description

The present invention relates to a rotation transmission device that transmits rotation between gears.

### 2. Description of the Related Art

In some exemplary operation devices, a motor-driven gear and a gear that rotates together with an operated body operated so as to be rotated are linked together through a driving force transmission mechanism.

In this case, helical gears are sometimes used to reduce backlash between gears constituting a rotation transmission device. A related technique is disclosed in, for example, Japanese Unexamined Patent Application Publication No. 2004-234072.

JP H11 141623 A shows a rotation transmission device having one rotation shaft comprising a first gear at a first end and a second gear at a second end. The rotation shaft is urged towards a large gear by a separately arranged leaf spring.

DE 31 14 170 A1 shows a transmission device which comprises reduced backlash. The transmission device comprises an input shaft with a first gear, an output shaft with a fourth gear, and a movable shaft having a second gear and a third gear at opposite ends of the movable shaft. The first gear meshes with the second gear, and the third gear meshes with the fourth gear. The movable shaft is supported by two bearings. The bearings are each movably supported by leaf springs, and a coil spring provides an urging force to the bearings such that the movable shaft is urged towards the input shaft and the output shaft to bring the first and second gears and the third and fourth gears close to each other.

Helical gears are effective in that the amount of backlash between them is smaller than when spur gears are used. However, these helical gears are problematic in that, to mold them, a metal mold needs to be moved up and down while being rotated, so the metal mold is expensive. Another problem is that a time (shot cycle) taken to manufacture gears is prolonged and parts thereby become expensive.

The present invention addresses the above situation by providing a rotation transmission device that uses inexpensive spur gears and still reduces backlash.

To address the above problem, a rotation transmission device in the present invention has a first gear, a second gear, and a rotation transmission part configured to transmit rotation between the first gear and the second gear. The rotation transmission part has a linking part, a third gear provided at one end of the linking part so as to engage the first gear, a fourth gear provided at another end of the linking part so as to engage the second gear, a supporting part configured to support the linking part so as to be inclinable and rotatable, and an urging part configured to urge the linking part so that the third gear is pressed to the first gear and the fourth gear is pressed to the second gear. At least one of a first combination of the first gear and third gear and a second combination of the second gear and fourth gear is a combination of spur gears.

In this structure, since the urging part presses the third gear to the first gear and also presses the fourth gear to the second gear, the first gear and third gear are engaged with each other with at least a prescribed pressing force and the second gear and fourth gear are engaged with each other with at least the prescribed pressing force. Therefore, even if at least one of the first combination of the first gear and third gear and the second combination of the second gear and fourth gear is a combination of spur gears, backlash can be reduced and operability can be enhanced.

In this structure, since the supporting member supports the linking part so as to be inclinable and rotatable, the third gear and fourth gear can be restricted to predetermined positions and can be supported there. This enables the linking part to be rotated in a stable orientation.

The present invention preferably has a supporting body having an accommodating part formed so as to accommodate the linking part by enclosing it. The supporting part is formed integrally with the supporting body.

In this structure, since the supporting part is formed integrally with the supporting body, the number of parts can be reduced and the manufacturing cost can be suppressed.

The inner circumferential surface of the accommodating part of the present invention is preferably spaced from the linking part.

In this structure, since there is a space between the linking part and the inner circumferential surface of the accommodating part, no frictional force is generated between them. This enables operability and durability to be enhanced.

The urging part of the present invention is preferably a leaf spring that is formed integrally with the supporting body and presses the outer circumferential surface of the linking part.

In this structure, since the urging part is formed integrally with the supporting body, the function of the supporting part can be achieved by a single part and the rotation transmission device is compact and easy to assemble without having to increase the number of parts.

The present invention preferably has a plurality of urging parts.

In this structure, the plurality of urging parts urge the linking part in such a way that they enclose the linking part. This can stabilize the orientation of the linking part and can achieve a superior operational feeling.

The linking part of the present invention preferably has an engaging part configured to engage the supporting part and restrict the movement of the linking part in an axial direction.

In this structure, it is possible to prevent the linking part from going out of control in the axial direction. Therefore, an enhanced operational feeling can be obtained.

The engaging part of the present invention is preferably a leaf spring formed integrally with the linking part.

In this structure, since the engaging part is formed integrally with the linking part, the number of parts is not increased. In addition, in the process of moving the engaging part to a position at which the engaging part is supported by the supporting part, the first linking part is distorted in a radial direction. This enables the rotation transmission device to be easily assembled.

The linking part of the present invention is preferably structured by combining the third gear and fourth gear, which are formed separately.

In this structure, the linking part can be molded without having to use slide mold parts. This enables the costs of a metal mold and parts to be reduced.

Preferably, the first gear of the present invention rotates together with an operated body on which a rotation operation is performed, and the rotation of the second gear is driven by a motor to perform, for the operated body, a rotation operation to provide force sensation.

In this structure, when the operated body reaches a predetermined rotation position, the rotation operation of the second gear to provide force sensation is driven by the motor. The operation is transmitted to the operated body through the linking part.

In the present invention, it is possible to provide a rotation transmission device that uses inexpensive spur gears and still reduces backlash.
Fig. 1 is an external perspective view of a rotation operation device in an embodiment of the present invention;
Fig. 2 is an external perspective view illustrating the internal structure of the rotation operation device in Fig. 1;
Fig. 3 is an external perspective view illustrating the internal structure of the rotation operation device in a state in which the rotating member in Fig. 2 is removed;
Fig. 4 is an external perspective view of the rotating member in Fig. 2;
Fig. 5 is an external perspective view of a rotation transmission part and a motor;
Fig. 6 is an exploded perspective view of a supporting body, the rotation transmission part, and the motor;
Fig. 7 is a perspective view illustrating a state in which the rotating member and rotation transmission part engage each other;
Fig. 8 is a perspective view of the supporting body as viewed from Z1 in the Z2 direction;
Fig. 9 is a cross-sectional view as taken along line IX-IX in Fig. 3; and
Fig. 10 illustrates the orientation of the rotation transmission part attached to the supporting body at an angle.

A rotation transmission device in an embodiment of the present invention will be described below.

In this embodiment, the rotation transmission device is applied to a rotation operation device with force sensation.

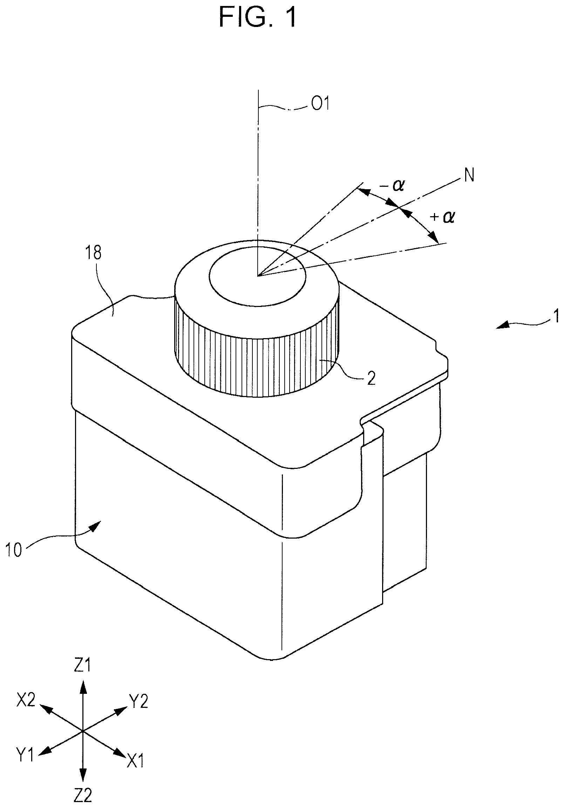

Fig. 1 is an external perspective view of a rotation operation device 1 in an embodiment of the present invention.

In Fig. 1 and all other drawings, the Z1 direction is taken as the upward direction, the Z2 direction as the downward direction, the Y1 direction as the forward direction, the Y2 direction as the backward direction, the X1 direction as the right direction, and the X2 direction as the left direction.

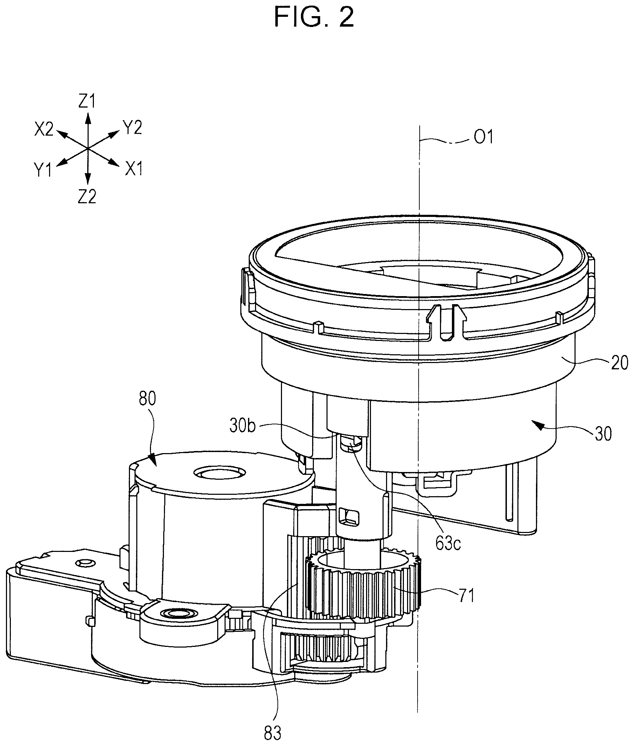

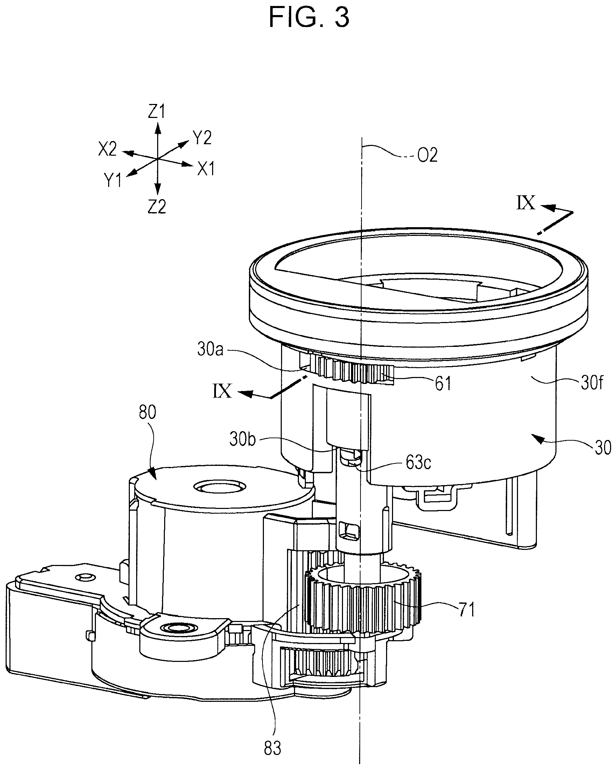

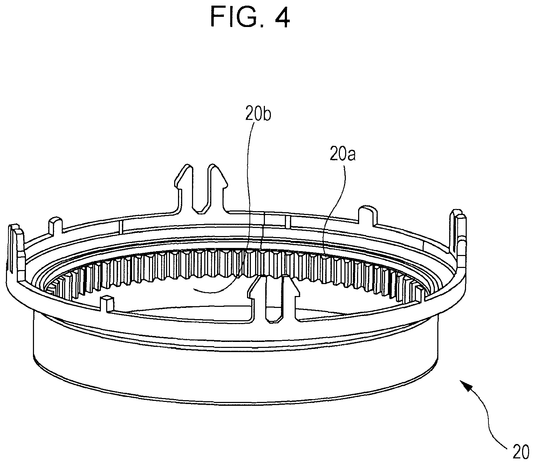

Fig. 2 is an external perspective view illustrating the internal structure of the rotation operation device 1 in Fig. 1. Fig. 3 is an external perspective view illustrating the internal structure of the rotation operation device 1 in a state in which the rotating member 20 in Fig. 2 is removed. Fig. 4 is an external perspective view of the rotating member 20 in Fig. 2.

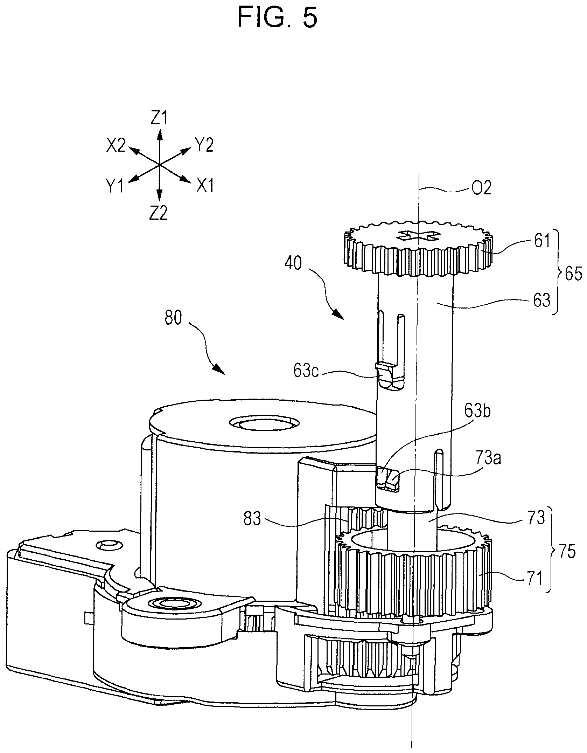

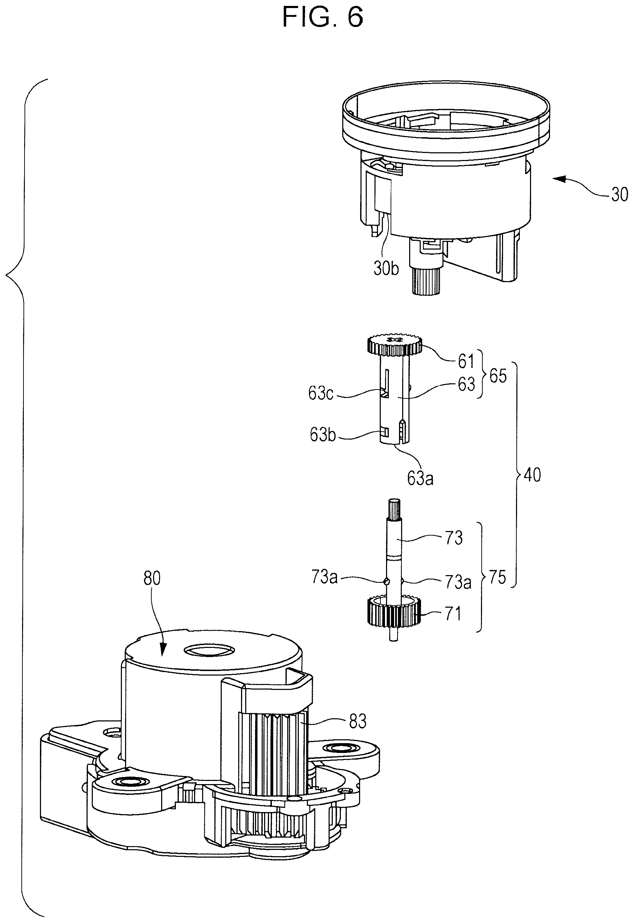

Fig. 5 is an external perspective view of a rotation transmission part 40 and a motor 80. Fig. 6 is an exploded perspective view of a supporting body 30, the rotation transmission part 40, and the motor 80.

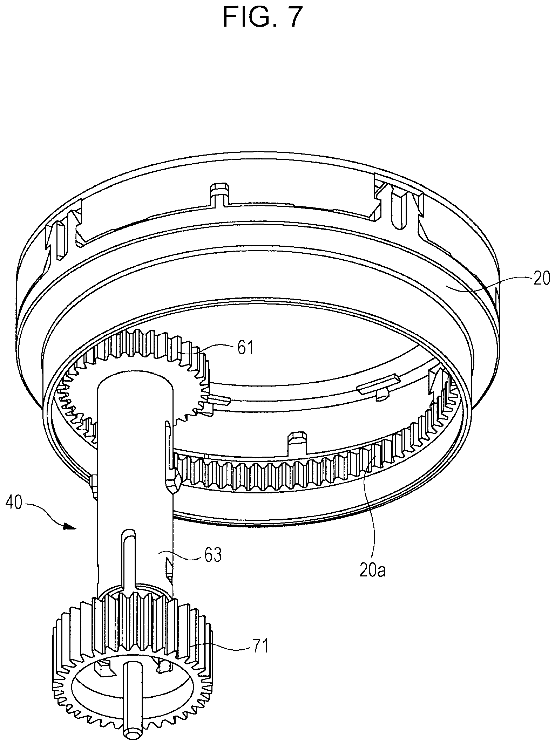

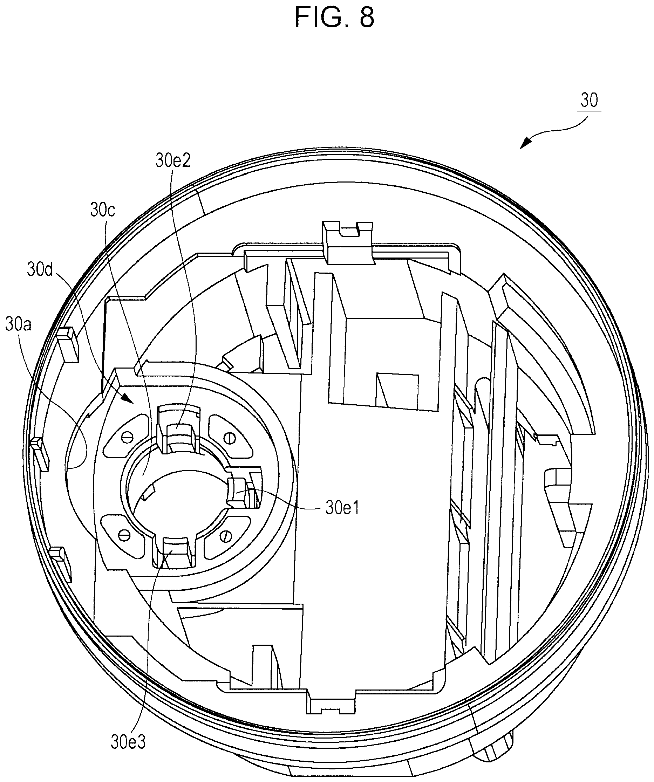

Fig. 7 is a perspective view illustrating a state in which the rotating member 20 and rotation transmission part 40 engage each other. Fig. 8 is a perspective view of the supporting body 30 as viewed from Z1 in the Z2 direction.

As illustrated in Figs. 1 and 2, the rotation operation device 1 has a supporting body 10, the supporting body 30 secured to the supporting body 10, the rotating member 20 rotatably supported to the supporting body 30, and an operated body 2 secured to the rotating member 20 at an end of the supporting body 30 in the Z1 direction.

The supporting body 10 is a housing formed from a synthetic resin. As illustrated in Fig. 1, the supporting body 10 is covered with a decorative cover 18 on the Z1 side.

The operated body 2 and rotating member 20 rotate together around a rotation reference line O1. The rotational angle of the operated body 2 and rotating member 20 with reference to a neutral position (N) is detected by a rotational angle sensor (not illustrated).

For example, certain rotational load torque is constantly applied to the operated body 2 and rotating member 20 by the motor 80, which will be described later, in a direction opposite to a direction in which the operated body 2 is operated. The operated body 2 is operated so as to be rotated while being given force sensation under strong rotational load torque so that the operator has a click feeling each time the operated body 2 is rotated in one direction by an angle of +α degrees from the neutral position (N). This is also true for another direction: the operated body 2 is operated so as to be rotated while being given force sensation under strong rotational load torque so that the operator has a click feeling each time the operated body 2 is rotated in the other direction by an angle of -α degrees. That is, the operator can perform a rotational input operation while having force sensation called a click feeling at intervals of +α degrees or -α degrees from the neutral position (N). When the rotating member 20 is attached to the supporting body 30, the operated body 2 and rotating member 20 are linked to the motor 80 through gears and are operated so as to be rotated with force sensation.

Although not illustrated in each drawing, the supporting body 10 internally includes an electric switching means that selects an electric output according to the rotational angle of the rotating member 20. For example, a control integrated circuit (IC) chip mounted on a circuit board (not illustrated) receives a result of rotational angle detection by the rotational angle sensor in the rotating member 20, makes a decision according to the result, and produces a predetermined electric output as a signal accordingly. Therefore, a rotation input device can be configured in which an electric output from the IC chip is changed each time the rotating member 20 is rotated by a rotational angle of +α degrees or -α degrees.

As illustrated in Fig. 2, the inner circumferential surface 20b, illustrated in Fig. 4, of the rotating member 20 is matched to the outer circumferential surface 30f, illustrated in Fig. 3, of the supporting body 30, and the rotating member 20 is attached to the supporting body 30 so as to be rotatable around the rotation reference line O1.

In this case, the first spur gear (inner gear) 20a, illustrated in Fig. 4 as a first gear, of the rotating member 20 engages a third spur gear 61, illustrated in Fig. 3, that protrudes from an opening 30a formed in the supporting body 30.

Specifically, as illustrated in Figs. 3 and 8, the opening 30a is circumferentially formed in the outer circumferential surface 30f of the supporting body 30, the rotating member 20 being attached to the outer circumferential surface 30f.

Part of the third spur gear 61 of the rotation transmission part 40 protrudes from the opening 30a so as to appear. As illustrated in Fig. 7, the third spur gear 61 protruding from the opening 30a toward the outside engages the first spur gear 20a formed on the inner circumferential surface of the rotating member 20, which rotates together with the operated body 2.

Thus, when the operator operates the operated body 2 with a finger or the like so as to be rotated and the rotating member 20 rotates accordingly around the rotation reference line O1, the third spur gear 61 and the first spur gear 20a of the rotating member 20 engage each other. Then, the rotation transmission part 40 rotates around a rotation reference line 02.

The structure of the rotation transmission part 40 will be described below in detail.

As illustrated in Fig. 6, the rotation transmission part 40 is structured by a combination of a first rotating member 65 and a second rotating member 75.

The first rotating member 65 has the third spur gear 61 and a first linking part 63, which is cylindrical, the third spur gear 61 being positioned at one end of the first linking part 63.

The first linking part 63 has an opening 63a at an end opposite to the end at which the third spur gear 61 is disposed.

The second rotating member 75 has a fourth spur gear 71 and a second linking part 73, which is cylindrical, the fourth spur gear 71 being positioned at one end of the second linking part 73.

As illustrated in Figs. 2, 3, and 5, the second linking part 73 is inserted through the opening 63a, illustrated in Fig. 6, in the first linking part 63 and is accommodated in the first linking part 63.

In a state in which the second linking part 73 is accommodated in the first linking part 63, a hook 73a provided on the outer circumferential surface of the second linking part 73 is fitted into an opening 63b formed in the outer circumferential surface of the first linking part 63 and is secured, as illustrated in Fig. 5. Specifically, two hooks 73a are provided at opposing positions on the outer circumferential surface of the second linking part 73. Each hook 73a is fitted into one of two openings 63b formed at opposing positions in the outer circumferential surface of the first linking part 63 and is secured.

In a state in which the rotation transmission part 40 is attached to the supporting body 30 as illustrated in Figs. 2, 3, 5, and 6, an engaging part 63c, which is shaped like a hook and is provided on the outer circumferential surface of the first linking part 63, is engaged with a supporting part 30b on the outer circumferential surface of the supporting body 30 as illustrated in Fig. 2. Specifically, two engaging parts 63c are provided at opposing positions on the outer circumferential surface of the first linking part 63. Each engaging part 63c is engaged with one of two support parts 30b opposite to each other at the end of an accommodating part 30c, which is substantially cylindrical and is disposed in the supporting body 30, on the Z2 side (the accommodating part 30c will be described later). The engaging parts 63c are formed integrally with the first linking part 63. The support parts 30b are formed integrally with the supporting body 30.

Each engaging part 63c engages the relevant supporting part 30b and restricts the movement of the rotation transmission part 40 in a direction along the rotation reference line 02. This can suppress the rotation transmission part 40 from going out of control in that direction.

As illustrated in Figs. 2 and 5, the fourth spur gear 71 of the second rotating member 75 engages a second spur gear 83 driven by the motor 80.

As illustrated in Fig. 8, the supporting body 30 has the accommodating part 30c, which is substantially cylindrical and passes through the supporting body 30 in the Z1-Z2 direction. Part of the first linking part 63 of the first rotating member 65 is accommodated in the accommodating part 30c.

The end of the accommodating part 30c in the Z2 direction is a ring-shaped surface that has a constant height in the Z direction and circumferentially continuous. At that end, the supporting parts 30b are formed, which engage the engaging parts 63c of the first linking part 63, described above, in a state in which the supporting parts 30b are opposite to the engaging parts 63c.

On the Z1 side with respect to the accommodating part 30c, an accommodating space 30d is formed that forms an accommodating space together with the accommodating part 30c, the third spur gear 61 being accommodated in the accommodating space 30d.

In a state in which the third spur gear 61 is accommodated in the accommodating space 30d, the third spur gear 61 is positioned outside the supporting body 30 through the opening 30a and engages the first spur gear 20a of the rotating member 20.

An urging part 30e1 is provided at a position at which the urging part 30e1 faces the opening 30a formed in the accommodating part 30c of the supporting body 30. Urging parts 30e2 and 30e3 are provided at both sides of the urging parts 30e1.

The opening 30a and urging parts 30e2, 30e1, and 30e3 are disposed along the inner circumference of the accommodating part 30c at angular intervals of about 90 degrees, as viewed from Z1 in the Z2 direction.

The urging parts 30e1, 30e2, and 30e3 are each a leaf spring formed integrally with the supporting body 30.

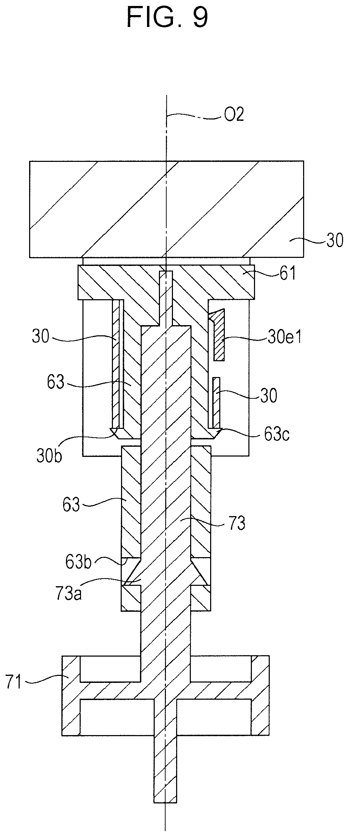

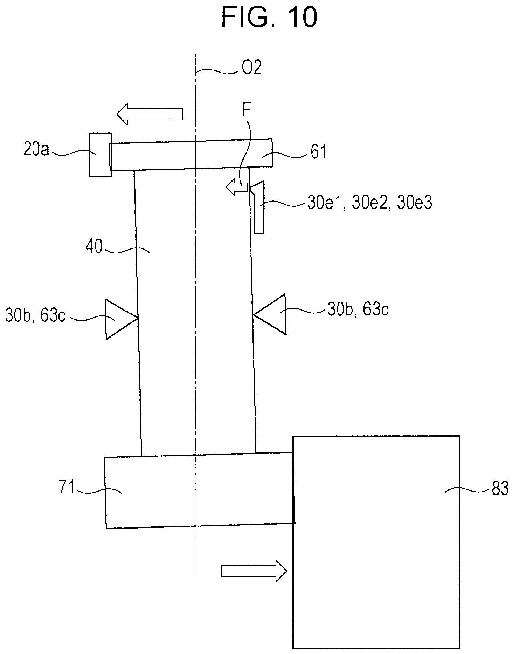

Fig. 9 is a cross-sectional view as taken along line IX-IX in Fig. 3. Fig. 10 illustrates the orientation of the rotation transmission part 40 attached to the supporting body 30 at an angle.

In a state in which the rotation transmission part 40 is attached to the supporting body 30 and the first linking part 63 is positioned in the accommodating part 30c, the urging parts 30e1, 30e2, and 30e3 abut the outer circumferential surface of the first linking part 63 and press the outer circumferential surface toward the rotation reference line 02.

Thus, the rotation transmission part 40 is inclined by an urging force F generated by the urging parts 30e1, 30e2, and 30e3 while the rotation transmission part 40 is supported by the supporting part 30b, as illustrated in Fig. 10. When the rotation transmission part 40 is inclined in this way, the third spur gear 61 is pressed toward the first spur gear 20a and the fourth spur gear 71 is pressed toward the second spur gear 83.

Accordingly, the third spur gear 61 comes close to and abuts the first spur gear 20a until a clearance between their routes is constantly eliminated so that the third spur gear 61 engages the first spur gear 20a while performing self-adjustment so as to narrow inter-gear pitches. Similarly, the fourth spur gear 71 comes close to and abuts the second spur gear 83 until a clearance between their routes is constantly eliminated so that the fourth spur gear 71 engages the second spur gear 83 while performing self-adjustment so as to narrow inter-gear pitches. This enables backlash between gears to be suppressed. That is, even if spur gears, which are available at lower costs than helical gears, are used, it is possible to suppress backlash.

Next, the operation of the rotation operation device 1 will be described.

When the operator operates the operated body 2 with a finger or the like so as to rotate the operated body 2 around the rotation reference line O1, the rotating member 20 rotates together with the operated body 2.

In response to the rotation of the rotating member 20, the third spur gear 61, illustrated in Fig. 5, of the rotation transmission part 40 rotates around the rotation reference line 02, the third spur gear 61 engaging the first spur gear 20a disposed on the inner circumference of the rotating member 20 as illustrated in Fig. 7.

Accordingly, the first rotating member 65 rotates and the second rotating member 75 also rotates together with the first rotating member 65.

When the first rotating member 65 and second rotating member 75 reach a predetermined rotation position, the detection result of the rotation angle is input from the rotational angle sensor to the control IC chip described above, after which an electric signal decided on the basis of the detection result is output.

When the electric signal is output, the second spur gear 83, for example, is driven by the motor 80 and rotates to provide force sensation.

The rotation of the second spur gear 83 is transmitted to the fourth spur gear 71 engaging the second spur gear 83, rotating the rotation transmission part 40. Therefore, a desired rotation operation to provide force sensation is transmitted to the operated body 2 through the first spur gear 20a.

Since the motor 80 constantly applies a certain rotational load as force sensation provided for the operated body 2, certain rotational load torque is transmitted to the operated body 2, the torque being exerted in a direction opposite to the direction in which the operated body 2 is operated so as to be rotated.

A predetermined electric signal is output from the control IC chip each time the operated body 2 and rotating member 20 are rotated by the rotational angle (+α or -α degrees) from the neutral position (N), so a rotation operation to provide force sensation that the operator can recognize as a click feeling is transmitted from the motor 80 to the operated body 2 at intervals of the rotational angle (+α degrees or -α degrees).

At that time, the urging parts 30e1, 30e2, and 30e3 abut the outer circumferential surface of the first linking part 63 on the Z1 side with respect to the supporting part 30b and press the outer circumferential surface on the Z1 side toward the rotation reference line 02, as illustrated in Figs. 9 and 10, so the rotation transmission part 40 is inclined with respect to the rotation reference line 02. Therefore, the third spur gear 61 is pressed toward the first spur gear 20a and the fourth spur gear 71 is pressed toward the second spur gear 83.

Accordingly, the third spur gear 61 comes close to and abuts the first spur gear 20a until a clearance between their routes is constantly eliminated so that the third spur gear 61 engages the first spur gear 20a while performing self-adjustment so as to narrow inter-gear pitches. Similarly, the fourth spur gear 71 comes close to and abuts the second spur gear 83 until a clearance between their routes is constantly eliminated so that the fourth spur gear 71 engages the second spur gear 83 while performing self-adjustment so as to narrow inter-gear pitches. Thus, rotation is transmitted without backlash between gears.

As described above, with the rotation operation device 1, the rotation transmission part 40 is urged by the urging parts 30e1, 30e2, and 30e3 toward the rotation reference line 02 on the Z1 side with respect to the engaging parts 63c while the engaging parts 63c of the rotation transmission part 40 are supported by the supporting parts 30b of the supporting body 30. Therefore, the rotation transmission part 40 can be inclined as illustrated in Fig. 10. Accordingly, the third spur gear 61 comes close to and abuts the first spur gear 20a until a clearance between their routes is constantly eliminated so that the third spur gear 61 engages the first spur gear 20a while performing self-adjustment so as to narrow inter-gear pitches. Similarly, the fourth spur gear 71 comes close to and abuts the second spur gear 83 until a clearance between their routes is constantly eliminated so that the fourth spur gear 71 engages the second spur gear 83 while performing self-adjustment so as to narrow inter-gear pitches. Thus, rotation is performed without backlash between gears, achieving a high operational feeling.

That is, with the rotation operation device 1, the rotation transmission part 40 has a certain amount of play, so the rotation transmission part 40 can be aligned with the rotation reference line 02 by being pressed from one direction.

With the rotation operation device 1, since the supporting parts 30b support the rotation transmission part 40 so as to be inclinable and rotatable, the third spur gear 61 and fourth spur gear 71 can be restricted to predetermined positions and can be supported there. This enables the rotation transmission part 40 to be rotated in a stable orientation.

With the rotation operation device 1, since the supporting parts 30b are formed integrally with the supporting body 30, the number of parts can be reduced and the manufacturing cost can be suppressed.

With the rotation operation device 1, the inner circumferential surface of the accommodating part 30c of the supporting body 30 illustrated in Fig. 8 is spaced from the first linking part 63 of the rotation transmission part 40 in a state in which the rotation transmission part 40 is accommodated in the accommodating part 30c.

In this structure, no frictional force is generated between the first linking part 63 and the inner circumferential surface of the accommodating part 30c. This enables operability and durability to be enhanced.

With the rotation operation device 1, the urging parts 30e1, 30e2, and 30e3 are each a leaf spring that is formed integrally with the supporting body 30 and presses the outer circumferential surface of the first linking part 63.

In this structure, since the urging parts 30e1, 30e2, and 30e3 are formed integrally with the supporting body 30, the rotation operation device 1 is compact and easy to assemble without having to increase the number of parts.

Since a plurality of urging parts denoted 30e1, 30e2, and 30e3 urge the first linking part 63 in such a way that they enclose the first linking part 63. This can stabilize the orientation of the rotation transmission part 40 and can achieve a superior operational feeling.

With the rotation operation device 1, each engaging part 63c of the rotation transmission part 40 engages the relevant supporting part 30b and restricts the movement of the rotation transmission part 40 in a direction along the rotation reference line 02. This can suppress the rotation transmission part 40 from going out of control in that direction.

With the rotation operation device 1, since the engaging part 63c is a leaf spring formed integrally with the first linking part 63, the number of parts is not increased. In addition, in the process of moving the engaging parts 63c to positions at which they are supported by the relevant supporting parts 30b, the first linking part 63 is distorted in a radial direction. This enables the rotation operation device 1 to be easily assembled.

With the rotation operation device 1, the first rotating member 65 having the third spur gear 61 and the second rotating member 75 having the fourth spur gear 71 are provided separately and then combined together to form the rotation transmission part 40. Therefore, the rotation transmission part 40 can be molded without having to use slide mold parts. This enables the costs of a metal mold and parts to be reduced.

The present invention is not limited to the embodiment described above.

That is, a person having ordinary skill in the art may make various modifications, combinations, sub-combinations, and replacements for the constituent elements in the above embodiment, without departing from the technical range of the present invention or an equivalent range of the technical range.

For example, in the embodiment described above, a case has been exemplified in which the fourth spur gear 71 engages the second spur gear 83, the rotation of which is driven by the motor 80, but the fourth spur gear 71 may engage a gear that is not motor-driven.

In the embodiment described above, a case has been exemplified in which a combination of the first spur gear 20a and third spur gear 61 and a combination of the fourth spur gear 71 and second spur gear 83 are each a combination of spur gears, but only any one of these combinations may be a combination of spur gears.

In the embodiment described above, a case has been exemplified in which three urging parts denoted 30e1, 30e2, and 30e3 are provided, but any other number of urging parts may be provided.

In the embodiment described above, a case has been exemplified in which the first rotating member 65 and second rotating member 75 are formed separately and then combined together to form the rotation transmission part 40, but the rotation transmission part 40 may be formed integrally with the third spur gear 61 and fourth spur gear 71.

The motor 80 has performed a rotation operation to provide force sensation so that a click feeling is generated each time the operated body 2 is rotated by an angle of +α degrees or -α degrees, but another rotation operation to provide force sensation may be performed. For example, a rotation operation to provide force sensation may be performed so that when a rotation of the operated body 2 by β degrees is detected, to prevent the operated body 2 from further rotating in the same direction, the motor 80 generates a strong rotational load to impose a restriction.

The present invention can be applied to, for example, a rotation transmission device that uses gears to transmit rotation.

## Claims

1. A rotation transmission device comprising:
a first gear (20a);
a second gear (83); and
a rotation transmission part (40) configured to transmit rotation between the first gear (20a) and the second gear (83); wherein
the rotation transmission part (40) has
a linking part (63),
a third gear (61) provided at one end of the linking part (63) so as to engage the first gear (20a),
a fourth gear (71) provided at another end of the linking part (63) so as to engage the second gear (83),
a supporting part (30b) configured to support the linking part (63) so as to be inclinable and rotatable, and
an urging part (30e1) configured to urge the linking part (63) so that the third gear (61) is pressed to the first gear (20a) and the fourth gear (71) is pressed to the second gear (83), and
at least one of a first combination of the first gear (20a) and the third gear (61) and a second combination of the second gear (83) and the fourth gear (71) is a combination of spur gears;
**characterized in that**
the rotation transmission part (40) is structured by a combination of a first rotating member (65) and a second rotating member (75), wherein the first rotating member (65) has the third gear (61) and the linking part (63), which is cylindrical, wherein the third gear (61) is positioned at one end of the linking part (63); and
the second rotating member (75) has the fourth gear (71) and a second linking part (73), which is cylindrical,
the fourth gear (71) being positioned at one end of the second linking part (73).

2. The rotation transmission device according to Claim 1, further comprising a supporting body (30) having an accommodating part (30c) formed so as to accommodate the linking part (63) by enclosing the linking part (63), wherein
the supporting part (30b) is formed integrally with the supporting body (30).

3. The rotation transmission device according to Claim 2, wherein an inner circumferential surface of the accommodating part (30c) is spaced from the linking part (63).

4. The rotation transmission device according to any of Claims 2 to 3, wherein the urging part (30e1) is a leaf spring formed integrally with the supporting body (30), the urging part (30e1) pressing an outer circumferential surface of the linking part (63).

5. The rotation transmission device according to any of Claims 1 to 4, wherein a plurality of urging parts (30e1, 30e2, 30e3) are provided.

6. The rotation transmission device according to any of Claims 1 to 5, wherein the linking part (63) has an engaging part (63c) configured to engage the supporting part (30b) and restrict a movement of the linking part (63) in an axial direction.

7. The rotation transmission device according to Claim 6, wherein the engaging part (63c) is a leaf spring formed integrally with the linking part (63).

8. The rotation transmission device according to any of Claims 1 to 7, wherein the linking part (63) is structured by combining the third gear (61) and the fourth gear (71), which are formed separately.

9. The rotation transmission device according to any of Claims 1 to 8, wherein:
the first gear (20a) rotates together with an operated body (2) on which a rotation operation is performed; and
a rotation of the second gear (83) is driven by a motor (80) to perform, for the operated body (2), a rotation operation to provide force sensation.

## Patentansprüche

1. Rotationsübertragungsvorrichtung, aufweisend:
ein erstes Zahnrad (20a);
ein zweites Zahnrad (83); und
ein Rotationsübertragungsteil (40), das zum Übertragen von Rotation zwischen dem ersten Zahnrad (20a) und dem zweiten Zahnrad (83) ausgebildet ist;
wobei das Rotationsübertragungsteil (40) aufweist:
ein Verbindungsteil (63),
ein drittes Zahnrad (61), das an einem Ende des Verbindungsteils (63) vorgesehen ist, um mit dem ersten Zahnrad (20a) zu kämmen,
ein viertes Zahnrad (71), das an einem anderen Ende des Verbindungsteils (63) vorgesehen ist, um mit dem zweiten Zahnrad (83) zu kämmen, ein Abstützteil (30b), das zum derartigen Abstützen des Verbindungsteils (63) ausgebildet ist, dass dieses neigbar und drehbar ist, und
ein Drückteil (30e1), das dazu ausgebildet ist, das Verbindungsteil (63) derart mit Druck zu beaufschlagen, dass das dritte Zahnrad (61) gegen das erste Zahnrad (20a) gedrückt wird und das vierte Zahnrad (71) gegen das zweite Zahnrad (83) gedrückt wird, und
wobei mindestens eine von einer ersten Kombination aus dem ersten Zahnrad (20a) und dem dritten Zahnrad (61) und einer zweiten Kombination aus dem zweiten Zahnrad (83) und dem vierten Zahnrad (71) eine Kombination von Stirnrädern ist;
**dadurch gekennzeichnet,**
**dass** das Rotationsübertragungsteil (40) durch eine Kombination aus einem ersten Rotationselement (65) und einem zweiten Rotationselement (75) aufgebaut ist, wobei das erste Rotationselement (65) das dritte Zahnrad (61) und das Verbindungsteil (63) aufweist, das zylindrisch ausgebildet ist, wobei das dritte Zahnrad (61) an einem Ende des Verbindungsteils (63) angeordnet ist; und
**dass** das zweite Rotationselement (75) das vierte Zahnrad (71) und ein zweites Verbindungsteil (73) aufweist, das zylindrisch ausgebildet ist, wobei das vierte Zahnrad (71) an einem Ende des zweiten Verbindungsteils (73) angeordnet ist.

2. Rotationsübertragungsvorrichtung nach Anspruch 1,
die ferner einen Abstützkörper (30) mit einem Aufnahmeteil (30c) aufweist, der derart ausgebildet ist, dass er das Verbindungsteil (63) aufnimmt, indem er das Verbindungsteil (63) umschließt, wobei
das Abstützteil (30b) einstückig mit dem Abstützkörper (30) ausgebildet ist.

3. Rotationsübertragungsvorrichtung nach Anspruch 2,
wobei eine Innenumfangsfläche des Aufnahmeteils (30c) von dem Verbindungsteil (63) beabstandet ist.

4. Rotationsübertragungsvorrichtung nach einem der Ansprüche 2 bis 3,
wobei das Drückteil (30e1) eine Blattfeder ist, die einstückig mit dem Abstützkörper (30) ausgebildet ist, wobei das Drückteil (30e1) gegen eine Außenumfangsfläche des Verbindungsteils (63) drückt.

5. Rotationsübertragungsvorrichtung nach einem der Ansprüche 1 bis 4,
wobei mehrere Drückteile (30e1, 30e2, 30e3) vorgesehen sind.

6. Rotationsübertragungsvorrichtung nach einem der Ansprüche 1 bis 5,
wobei das Verbindungsteil (63) ein Zusammenwirkungsteil (63c) aufweist, das dazu ausgebildet ist, mit dem Abstützteil (30b) zusammenzuwirken und eine Bewegung des Verbindungsteils (63) in einer axialen Richtung einzuschränken.

7. Rotationsübertragungsvorrichtung nach Anspruch 6,
wobei das Zusammenwirkungsteil (63c) eine Blattfeder ist, die einstückig mit dem Verbindungsteil (63) ausgebildet ist.

8. Rotationsübertragungsvorrichtung nach einem der Ansprüche 1 bis 7,
wobei das Verbindungsteil (63) durch Kombinieren des dritten Zahnrads (61) und des vierten Zahnrads (71) aufgebaut ist, die getrennt ausgebildet sind.

9. Rotationsübertragungsvorrichtung nach einem der Ansprüche 1 bis 8,
wobei sich das erste Zahnrad (20a) zusammen mit einem betätigten Körper (2) dreht, an dem ein Rotationsvorgang ausgeführt wird; und
wobei eine Drehung des zweiten Zahnrads (83) durch einen Motor (80) veranlasst wird, um für den betätigten Körper (2) einen Rotationsvorgang auszuführen und dabei ein Kraftgefühl bereitzustellen.

## Revendications

1. Dispositif de transmission de rotation comprenant :
une première roue dentée (20a) ;
une deuxième roue dentée (83) ; et
une pièce de transmission de rotation (40) configurée de manière à transmettre une rotation entre la première roue dentée (20a) et la deuxième roue dentée (83) ; où
la pièce de transmission de rotation (40) possède
une pièce de liaison (63),
une troisième roue dentée (61) située à une extrémité de la pièce de liaison (63) de manière à entrer en prise avec la première roue dentée (20a),
une quatrième roue dentée (71) située à une autre extrémité de la pièce de liaison (63) de manière à entrer en prise avec la deuxième roue dentée (83),
une pièce de support (30b) configurée pour supporter la pièce de liaison (63) de manière à ce qu'elle puisse s'incliner et tourner, et
une pièce de sollicitation (30e1) configurée pour solliciter la pièce de liaison (63) de manière à ce que la troisième roue dentée (61) soit pressée vers la première roue dentée (20a) et que la quatrième roue dentée (71) soit pressée vers la deuxième roue dentée (83), et
au moins l'une d'une première combinaison de la première roue dentée (20a) et de la troisième roue dentée (61) et d'une deuxième combinaison de la deuxième roue dentée (83) et de la quatrième roue dentée (71) est une combinaison de roues dentées droites ;
**caractérisé en ce que**
la pièce de transmission de rotation (40) est structurée par une combinaison d'un premier élément rotatif (65) et d'un deuxième élément rotatif (75), où le premier élément rotatif (65) présente la troisième roue dentée (61) et la pièce de liaison (63), qui est cylindrique, et où la troisième roue dentée (61) est positionnée à une extrémité de la pièce de liaison (63) ; et
le deuxième élément rotatif (75) présente la quatrième roue dentée (71) et une deuxième pièce de liaison (73), qui est cylindrique, la quatrième roue dentée (71) étant positionnée à une extrémité de la deuxième pièce de liaison (73).

2. Le dispositif de transmission de rotation selon la revendication 1, comprenant en outre un corps de support (30) présentant une pièce de réception (30c) formée de manière à accueillir la pièce de liaison (63) en enfermant la pièce de liaison (63), où la pièce de support (30b) est entièrement solidaire du corps de support (30).

3. Le dispositif de transmission de rotation selon la revendication 2, où une surface circonférentielle intérieure de la pièce de réception (30c) est espacée de la pièce de liaison (63).

4. Le dispositif de transmission de rotation selon l'une quelconque des revendications 2 à 3, où la pièce de sollicitation (30e1) est un ressort à lames entièrement solidaire du corps de support (30), la pièce de sollicitation (30e1) pressant sur une surface circonférentielle extérieure de la pièce de liaison (63).

5. Le dispositif de transmission de rotation selon l'une quelconque des revendications 1 à 4, où une pluralité de pièces de sollicitation (30e1, 30e2, 30e3) sont fournies.

6. Le dispositif de transmission de rotation selon l'une quelconque des revendications 1 à 5, où la pièce de liaison (63) présente une pièce d'engagement (63c) configurée de manière à entrer en prise avec la pièce de support (30b) et à restreindre un mouvement de la pièce de liaison (63) dans une direction axiale.

7. Le dispositif de transmission de rotation selon la revendication 6, où la pièce d'engagement (63c) est un ressort à lames entièrement solidaire de la pièce de liaison (63).

8. Le dispositif de transmission de rotation selon l'une quelconque des revendications 1 à 7, où la pièce de liaison (63) est structurée par la combinaison de la troisième roue dentée (61) et de la quatrième roue dentée (71), qui sont formées séparément.

9. Le dispositif de transmission de rotation selon l'une quelconque des revendications 1 à 8, où :
la première roue dentée (20a) tourne avec un corps actionné (2) sur lequel est effectuée une opération de rotation ; et
une rotation de la deuxième roue dentée (83) est entraînée par un moteur (80) afin d'effectuer, pour le corps actionné (2), une opération de rotation pour produire une sensation de force.
